# EUROPEAN PATENT APPLICATION

(11) **EP 1 653 392 A1**
(43) Date of publication of application: **03.05.2006**
(21) Application number: 04106453.6
(22) Date of filing: 10.12.2004
(51) Int. Cl.: G06K 9/64

(54) **Peak pattern evaluation using spring model**

(71) Applicant: Agilent Technologies Inc, Palo Alto, CA 94303-0870 (US)
(72) Inventor: JAEGER, Rainer, 76131, Karlsruhe (DE)
(74) Representative: Barth, Daniel Mathias

(57) **Abstract**

A method for determining a property of a measured peak pattern comprising at least one peak is described. The method comprises steps of extracting measured peak parameters from the measured peak pattern, and of determining deviations of the measured peak parameters from reference values of a reference peak pattern. Said reference peak pattern is represented by a spring model, with peak parameters being represented by corresponding springs. The method further comprises a step of determining a deformation energy necessary for deforming the reference peak pattern in a way that the deformed reference peak pattern substantially represents the measured peak pattern.

## Description

The present finding refers, in a totally general way, to trailers or trucks a typical use of which is in the field of agriculture and/or forestry.

More specifically, it regards an axle group of the modular type that is intended to be associated with the quoted trailers, or trucks.

A purpose of the finding is that of providing an axle group of the modular type that can be used on trailers or trucks having any number of axles, without the requirement to modify the frame, or flat-bed, of said trailers or trucks in any way.

A further purpose is that of making a modular axle group the structure of which carries all of the elements making up the group, i.e. constitutes a complete and self-supporting assembly, thus capable of withstanding the twisting stresses that occur, so that the flat-bed of the respective truck or trailer, having to withstand substantially just the flexing stresses due to the generally vertical forces, does not have to be strengthened with transversal braces intended to counteract the quoted twisting stresses as happens according to the prior art.

Another purpose of the finding consists of making an axle group the wheels, or axle shafts, of which are independent.

Another purpose is that of making an axle group with independent wheels and with hydraulic control that is suitable for keeping the load constant and equally distributed on each wheel of the trailer irrespective of the position in height of said wheels.

A further purpose is that of providing an axle group with independent wheels and a hydraulic control, and in general braking, which is structured in such a way as to be able to configure said wheels in steering, self-steering or zero steering mode, according to requirements, at the moment of installation on a trailer. Another purpose is that of making an axle group of the modular type and with independent wheels with hydraulic control where the wheels can be adjusted in height according to requirements.

Yet another purpose is that of achieving the quoted objectives in the context of a simple, strong, rational, reliable, functional and compact constructive solution.

The above is achieved thanks to the characterising elements indicated in the main claim.

Advantageous and preferred embodiments are outlined in the dependent claims.

In a totally general way, the axle group of the modular type according to the finding comprises a shaped beam intended to be installed transversally and below the flat-bed of a trailer, and two side-by-side identical underlying small frames that are articulated at one end to the quoted beam according to a common transversal horizontal axis so as to be able to oscillate with respect to the beam, whereas at the other end they are joined to the same beam through a respective member with variable configuration, and they each carry a wheel-carrying hub, or axle shaft.

Preferably, said small frames extend beyond said transversal common articulation axis in the opposite direction to the direction of travel of the trailer.

Preferably, said member with variable configuration consists of an elastically yielding means, the latter typically in the form of an extensible remote-controlled system that can be adjusted according to requirements (automatically or manually) with the trailer both moving and stationary.

Said extensible system can advantageously consist of a single or double effect hydraulic jack placed under the control of a hydraulic apparatus comprising at least one pneumatic expansion box, or shock-absorber, suitable for also giving the jack the function, indeed, of a shock-absorber.

Preferably, said apparatus is structured so as to also equip said jack for the function of a leveller of the trailer, both when moving and when stationary as stated above, with possible exclusion of the quoted pneumatic expansion box.

Thanks to the solution outlined above all of the purposes of the finding are accomplished as shall become clear from the following detailed description.

It is made with reference to the figures of the attached tables of drawings that show two preferred and not exhaustive embodiments of the modular axle group according to the finding, and where:
FIG. 1 is a rear perspective view that shows a complete modular axle group according to a first embodiment of the finding, in the self-steering version.
FIG. 2 is an enlarged partial view obtained according to the direction II indicated in FIG. 1.
FIG. 3 is a perspective view that schematically shows a trailer with two axles on which said first embodiment of the finding is installed according to two different versions or embodiments.
FIG. 4 is a view totally similar to the previous one, and it refers to a trailer with three axes where the axes are provided by the finding configured according to two types of embodiment.
FIG. 5 is a perspective view that shows the finding according to a second embodiment, in self-steering version.
FIG. 6 is the section VI-VI indicated in FIG. 5.

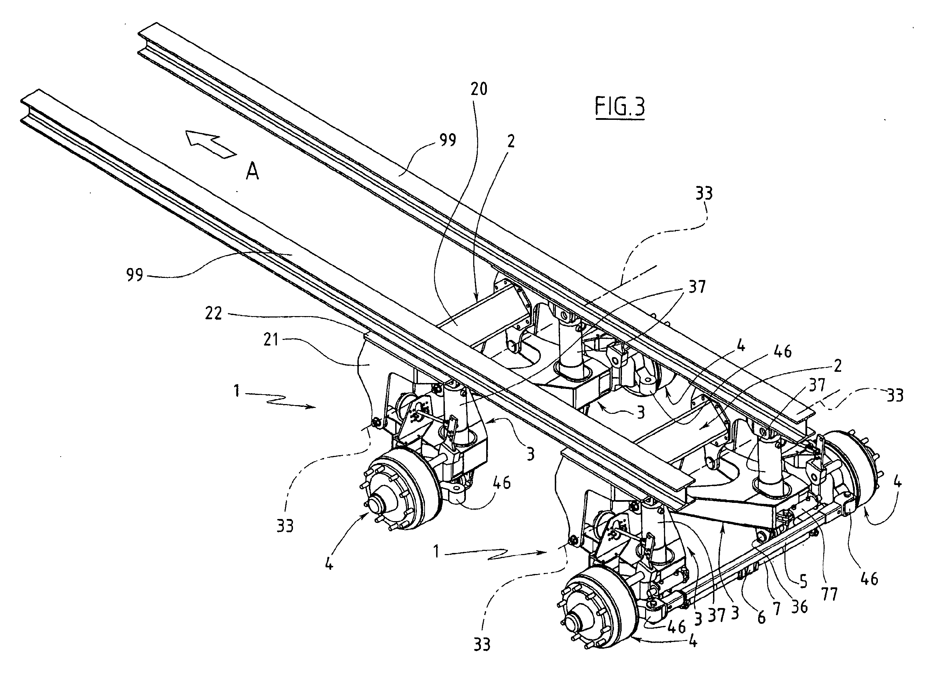

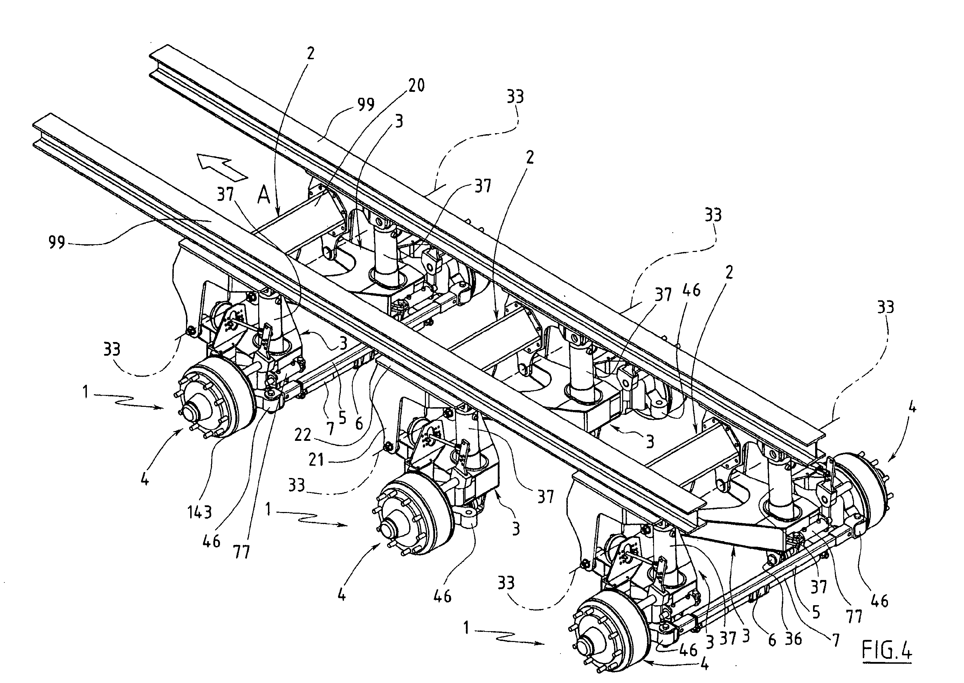

First of all it should be specified that with reference letter A in the figures the direction of travel of a truck, or trailer, is indicated, the latter being schematised in FIGS. 3 and 4 with two longitudinal members 99 of the respective flat-bed. Said longitudinal members 99 are not strengthened by any transversal braces thanks to the self-supporting structure of the axle group in object, as specified in the preamble and as shall become clear hereafter.

It should also be specified that hereafter with the terms fore and back, front and rear, transversal and longitudinal, and similar, unless there are indications to the contrary, we mean the positions that the members occupy at the named time with reference to said direction of travel A.

The aforementioned axle group, wholly indicated with reference numeral 1, comprises, in brief, a cross-member 2 that is intended to fix the axle group 1 under the quoted longitudinal members 99, and transversally to them (see FIGS. 3 and 4); two identical underlying small flat frames 3 that are carried by the overlying beam 2; and two complete axle shafts 4 that are set on the outer sides of said small frames 3.

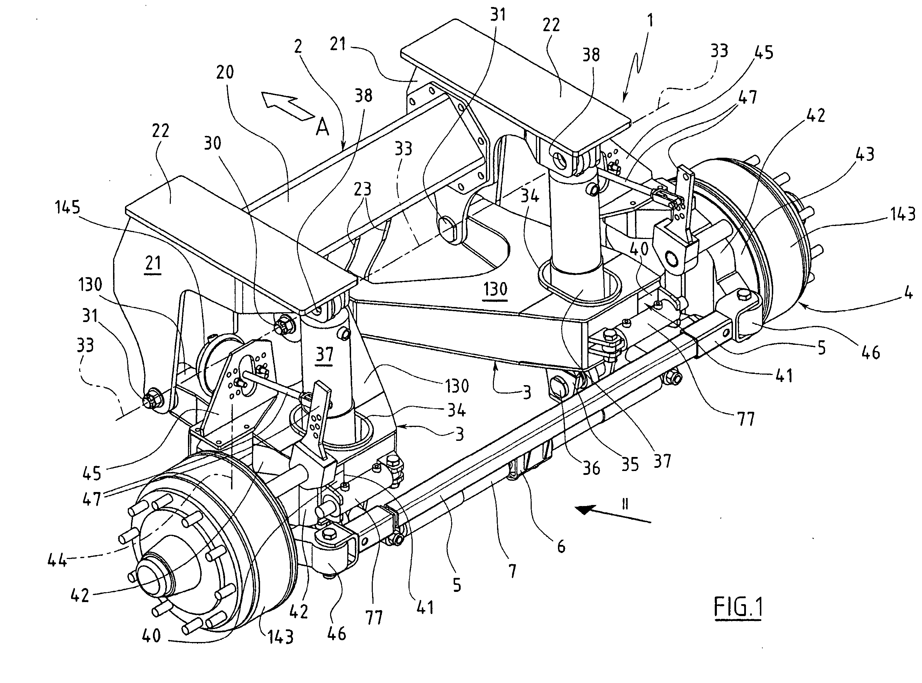

In detail, said cross-member 2 comprises, see in particular FIGS. 1, 5 and 6, a robust horizontal tubular element with polygonal section 20 the opposite ends of which are fixed to two vertical box-shaped brackets 21. The two brackets 21 are shaped forming a right angle, and their dihedral faces downwards and towards the rear zone of the trailer. It should be specified that there is nothing to prevent the brackets 21 from being orientated in the opposite direction, i.e. with the dihedral facing downwards and forwards.

The upper arm of each bracket 21 carries a platband 22 that is intended to be advantageously fixed under a respective longitudinal member 99, for example with bolts (FIG. 5) or through welding (FIG. 1). A complete description of the example embodiment according to FIGS. 1-4 is shown hereafter.

As is clearly illustrated, from the middle plane of the lower generatrices of the tubular element 20 derives a series of identical perforated vertical ears 23 that are parallel to the brackets 21, and the holes of which, aligned with each other, are arranged in axis with respective through holes formed at the lower ends of the vertical arms of the brackets 21.

The quoted holes define a transversal horizontal axis, indicated with 33 in the figures, which constitutes the common front hinging axis of the small frames 3 to the overlying cross-member 2. This takes place through four suitable pins, the two central ones being indicated with 30, and the outer ones being indicated with 31.

It should be specified that the presence of the two central pins 30 allows the small frames 3 to be advantageously dismounted separately, or independently.

Each individual small frame 3 consists of a flat box-shaped structure 130 lying practically horizontally, which in plan has a form generally shaped like a fork with concavity facing in the direction of travel A.

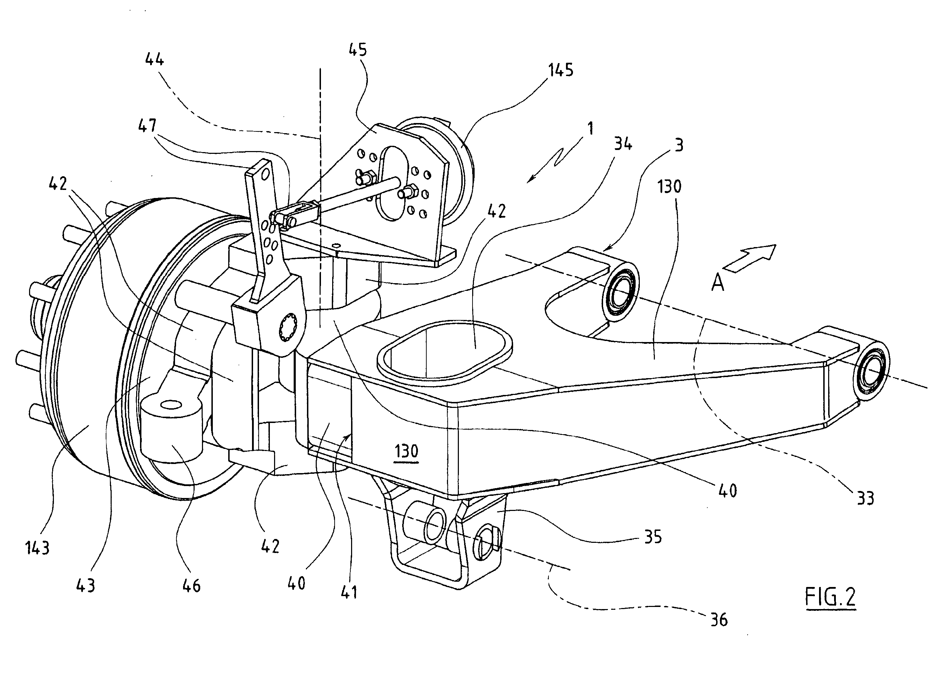

As clearly illustrated in FIG. 1, the inner arm of said fork-shape is articulated to the respective central pin 30; the outer arm of the same fork-shape is hinged to the respective outer pin 31; and the cross-member of the same fork-shape has, substantially at the centre, a vertical through opening 34 that in plan has the shape of a slot with longitudinal extension perpendicular to the axis 33. Under the rear end of the small frame 3 a fork 35 is fixed that faces the lower mouth of said opening 34, and the arms of which are perforated (see FIG. 2), to provide the seat for a transversal horizontal pin 36 (FIGS. 1 to 4).

The quoted pin 36 has the lower end of a member with variable configuration 37 articulated to it, in the present case consisting of an elastically yielding means 37 that crosses the opening 34 with clearance, beyond which with the opposite upper end it is articulated at 38 (FIG. 1) below the horizontal arm of the respective bracket 21.

According to the teachings of the finding, said elastically yielding means consists of a single or double effect hydraulic jack the operative chambers of which are connected to a suitable command and control hydraulic apparatus arranged on board the tractor.

This apparatus, which amongst other things comprises at least one expansion box or pneumatic shock-absorber, shall be better defined hereafter.

As stated previously, and as clearly illustrated in all of the attached figures, each small frame 3 has a complete axle shaft 4, i.e. equipped with a respective steering group and with a respective braking group, associated with it.

The axle shafts 4 are generally of the known type, and each of them comprises the following members.

First of all, a bracket generally shaped to form a right-angle 40 that is coplanar with the small frame 3, and the dihedral of which faces forwards and towards the centre of the axle group 1.

One side of said right-angle shape is received and fixed in a suitable seat 41 formed on the outer side of the rear end of the small frame 3 (see FIG. 2), and the remaining side carried a perpendicular through pin, schematised with 44 in FIGS. 1 and 2.

The steering arm 42 is articulated to the pin 44.

The quoted arm 42 carries, see in particular FIG. 2, on the upper-front side, a support 45 for holding a service pneumatic expansion box 145 for braking; on the outer side the hub-carrying disc 43 with relative winding drum 143 for the attachment of a wheel (rim + tire), not shown for the sake of simplicity and clarity; and at the rear end an eyelet 46.

Said expansion box 145, per sé normal, is intended, upon the command of the driver of the car that pulls the trailer, to actuate an equally normal lever system 47 with which to activate the braking device (not visible in the figures) arranged between disc 43 and drum 143.

Finally, the eyelets 46 of the steering arms of two aligned axle shafts 4 are joined together by a transversal shaft 5 that is in turn connected, through a central block indicated with 6, to a rod 7 that connects two elastically yielding head devices 77 to the central block 6.

In particular, said rod 7 consists of two identical shock absorbers that are set on either side of the quoted block 6.

Moreover, said devices 77 are set behind the small frames 3, and connect them to the inner sides of the steering arms 42 (see Fig. 1 on the right).

Substantially, the elements just described, i.e. the assembly consisting of shaft 5, rod 7 and devices 77, provide the steering linkage of the two shaft axles 4.

In particular it is structured, positioned and sized in such a way as to be able to readily configure the axle group 1 according to the three operating modes indicated hereafter.

The first mode, which we shall call fixed or with zero steering, is the one the foresees installing the axle group 1 on a trailer without the quoted assembly of elements 5, 7 and 77, the disassembly of which comes down to very little given the simple attachment system clearly illustrated in FIG. 1, and simultaneously disabling the specific function of the pins 44, thanks to a suitable blocking system (not visible in the figures), for example consisting of a simple transversal bolt accessible from the outside.

Examples of said first mode are given by the front axle group 1 according to FIG. 3 and by the central axle group 1 according to FIG. 4.

The second mode, which we shall call self-steering, is the one that foresees installing the entire axle group 1 as shown in FIG. 1; enabling the pins 44; and providing the elastically yielding devices 77 in the form of double effect hydraulic jacks.

The operative chambers of the quoted jacks are connected to the hydraulic apparatus (hydraulic distributor) generally arranged on the tractor, and the shock-absorbing effect is given to the component elements of the rod 7, which also operate as anti-wobbling means.

In the third mode, which we shall call steering, the quoted devices 77, once again consisting of double effect hydraulic jacks, are slaved to the hydroguide of the steer of the car pulling the trailer, typically through its own command and control hydraulic apparatus, so as to control the steering of the wheels of the axle group 1, limiting it.

The configuration according to said steering mode has been shown since it can be easily understood from the self-steering mode shown in the figures, and specified above.

With particular reference to the jacks, or hydraulic cylinders, 37 arranged between cross-member 2 and small frames 3, with respect to them said command and control hydraulic apparatus, which as stated has at least one expansion box or pneumatic shock-absorber, performs at least the following functions.

One, with automatic activation, thanks to which the two jacks 37 constantly operate as shock-absorbers, and the other, the activation of which is placed under the control of the driver of the means that pulls the trailer, which allows said jacks/shock-absorbers 37 to operate as levelling devices.

Said levelling action can obviously be enabled both with the trailer moving and stationary, and can advantageously be exploited in various situations.

For example, it can be used to ease loading and unloading operations of the trailer when stationary, for example by inclining the flat-bed either longitudinally forwards or backwards, or transversally towards one side or the other.

Practically the sae considerations are valid when the trailer travels on ground that is somewhat irregular and/or with slopes orientated according to, or transversally to, the direction of travel A.

We consider it to be superfluous to describe said command and control hydraulic apparatus to which the quoted jacks or hydraulic cylinders 37 and 77 are enslaved in greater detail since its preparation for use falls within the usual knowledge and capabilities of experts in this field.

It should be specified that the quoted apparatus is equipped with means thanks to which the length of the hydraulic cylinders or jacks 37 can be modified as desired at the same time or not as the action of the expansion box or pneumatic shock-absorber.

Lastly, we would like to specify the special mutual position between cylinder 37 and respective axle shaft 4. It consists of the fact that with the trailer generally unloaded and stationary, the longitudinal axis of the cylinder 37 in practice intersects the longitudinal axis of the axle shaft 4 (FIGS. 1-4).

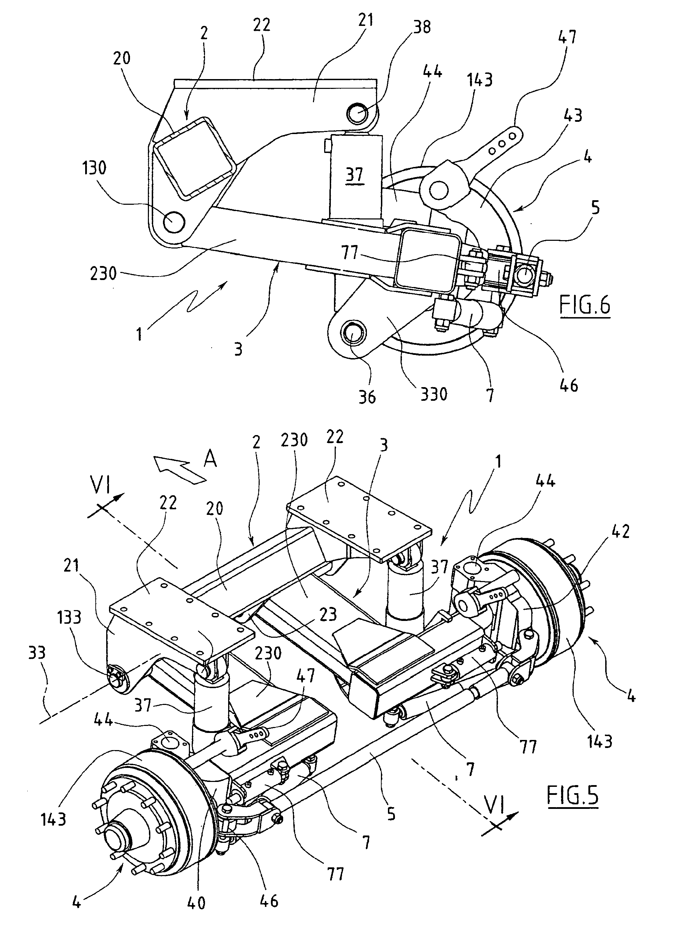

The embodiment according to FIGS. 5 and 6 operates substantially with the same modes explained with reference to the example according to FIGS. 1-4, and can be associated with a truck or trailer for example as indicated in FIGS. 3 and 4.

The main differences between the first embodiment fully described above (FIGS. 1-4) and the variant according to FIGS. 5 and 6 are substantially the following.

According to said variant each individual small frame 3 consists of a flat box-shaped structure 230 lying practically horizontally, which in plan has a form generally shaped to form a right-angle, or elbow. The two wings of said right-angle shape are respectively arranged parallel and perpendicular to the direction of travel A, and its dihedral faces towards the outside and in the direction of travel A.

The first of said wings is articulated under the beam 2 through a respective single pin 133, and the second carries the respective complete axle shaft 4, with the elastically yielding device 77 behind.

Said dihedral receives the jack 37, which at the top is articulated to the respective bracket 21 through the transversal horizontal pin 38, whereas at the bottom it is articulated to the transversal horizontal pin 36 that is carried by two descending ears 330 (see FIG. 6) deriving from the transversal wing of the small frame 3.

Moreover, as far as the rod 7 forming part of the steering linkage of the axle shafts 4 is concerned, it is split into two distinct shock-absorbers each of which has the outer end directly hinged to the respective steering arm 42, and the inner arm directly hinged under the respective small frame 3.

## Claims

1. Axle group intended to be associated with a pulled means, like a trailer with at least one axle, **characterised in that** it comprises a shaped cross-member (2) that is intended to be installed under and transversally to the flat-bed (99) of the trailer, and to which two side-by-side identical underlying small frames (3) are articulated according to a common axis (33, 130), which at the opposite end to said articulation are joined to the same beam through a respective member (37) with variable configuration, and each carry an axle shaft (4).

2. Group according to claim 1, **characterised in that** said member with variable configuration (37) comprises a hydraulic cylinder with automatic or manual control that comprises a pneumatic expansion box.

3. Group according to claim 2, **characterised in that** said apparatus comprises means suitable for modifying the length of said hydraulic cylinder so as to keep the load constant and equally distributed on the wheels irrespective of their position in height.

4. Group according to claim 2, **characterised in that** said apparatus comprises means suitable for modifying the length of the jack at the same time or not as the action of said pneumatic expansion box.

5. Group according to claim 1, **characterised in that** said axle shafts (4) have associated respective steering pins and a linkage assembly that comprises a tie rod (5) that connects together the steering parts of the same axle, as well as hydraulic actuation and control jacks (7, 77) that connect each of said steering parts to the fixed part of the respective axle shaft.

6. Trailer or similar, **characterised in that** it is equipped with at least one axle group according to any one of claims 1 to 5.
